# EUROPEAN PATENT APPLICATION

(11) **EP 2 660 726 A1**
(43) Date of publication of application: **06.11.2013**
(21) Application number: 12166419.7
(22) Date of filing: 02.05.2012
(51) Int. Cl.: G06F 13/38, H04L 12/46

(54) **Method and device for emulating a bus system**

(71) Applicant: SMSC Europe GmbH, 76185 Karlsruhe (DE)
(72) Inventor: Thiel, Christian, 83080 Oberaudorf (DE)
(74) Representative: Lohr, Georg

(57) **Abstract**

A network interface controller comprises two multimedia network ports for transmitting and receiving multimedia network frames and a CAN message processor for inserting and/or extracting CAN messages into or from the multimedia network frames. Furthermore, a CAN port for communication with an external CAN controller is provided. The CAN message processor emulates CAN message arbitration between the CAN messages extracted from the multimedia network frames and the CAN messages from the external CAN controller.

## Description

### Field of the invention

The invention relates to a bus system and specifically to an automotive bus system as used for vehicles or cars.

### Description of the related art

Many car manufacturers are integrating a plurality of networks into their cars for controlling the components of the cars. There are different types of networks dedicated to different tasks and therefore different types of data.

The most commonly used bus for connecting control units like the engine control unit, powertrain control unit and others is the CAN bus (Controller Area Network). It has been invented in 1983. Parts of its physical layer are disclosed in US 5357518 A. The data link layer was later standardized in ISO 11898-1. The CAN bus is designed for real time transmission of short messages. It cannot be used for multimedia transmission of audio or video signals due to its low data rate and its frames. As the CAN bus is in use since a long time, a significant amount of software has been developed and CAN transceivers have been integrated in many microcontrollers. Furthermore CAN is very simple and cheap. It requires simple and inexpensive wire harnesses and connectors.

For multimedia transmission high speed networks as disclosed in US 7668182 B2 having larger frames and larger bandwidth may be used. Such multimedia networks require different wire harnesses, connectors, different network controllers and different software than a CAN network has.

### Summary of the invention

The problem to be solved by the invention is to combine a CAN bus with a multimedia network while maintaining CAN software compatibility and providing the advantages of the multimedia network.

Solutions of the problem are described in the independent claims. The dependent claims relate to further improvements of the invention.

In general, it is very difficult to combine a CAN bus with a modern multimedia network, as both have significant differences in their design, function, hardware and network protocol. For this reason, CAN and multimedia networks have been coexisting a long time in cars. Due to the large differences and even the different fields of application, there was no requirement to combine these bus systems. By using the network interface controller disclosed herein, a CAN bus may now use the high performance infrastructure of a multimedia network. This leads to a reduction in cost, as the hardware of a plurality of CAN busses is no more required. The network interface controller also provides for a convenient upgrade path from CAN to a multimedia network, which allows using old CAN stacks and applications further. These may be replaced at a later time.

A network interface controller has at least one multimedia network port for high speed communication to at least another multimedia network interface controller. Preferably, the network interface controller has two multimedia network ports. The network interface controller communicates with other network interface controllers by exchanging multimedia network data frames by the at least one multimedia network port. The network interface controller further comprises at least one low speed network port, which preferably is a CAN port, which most preferably provides an interface like a CAN transceiver has, and to which a CAN controller can be connected. Furthermore, a CAN message processor is provided for reading and writing CAN messages from and into the multimedia network data frames. Preferably this CAN message processor handles CAN arbitration. For controlling the network interface controller, a microprocessor may be provided. This microprocessor may control the data flow between the multimedia network ports, the CAN message processor and the CAN port. For broadband data transfer within the network interface controller, a routing bus may further be provided. Preferably, this routing bus connects the at least one multimedia network port with other network ports, and preferably with the CAN message processor. In the preferred embodiment, at least one high speed bus port is provided. This high speed bus port allows for communication with other hardware components like control units connected to the network interface controller, further referred to as multimedia control unit. Here, preferably multimedia data are transferred. Furthermore, control data and/or control commands to the network interface controller may be transferred. Preferably, the high speed bus port is connected to the routing bus. Furthermore, it may communicate with the microprocessor, which may control the high speed bus port, and/or may receive commands to the microprocessor by the high speed bus port from a multimedia control unit. For communication with the multimedia control unit, the high speed bus port may have at least one of a MediaLB interface, I2C interface, or SPI interface.

In a further embodiment, a timing master may be provided to synchronize the network timing of all network interface controllers.

In a further embodiment, there may be a plurality of CAN segments. There may be a number of network interface controllers assigned to a specific CAN segment, whereas other network interface controllers are assigned to another CAN segment. There may be at least one network interface controller assigned to a plurality of CAN segments. The CAN control unit attached to the network interface controllers of the same CAN segment may communicate with each other, while the CAN control units connected to network interface controllers of different CAN segments are isolated from each other. This allows to emulate a plurality of CAN bus systems by using the same multimedia network. This further simplifies the network design and reduces the number of cables required. Due to the bandwidth of the multimedia network which is significantly higher than the CAN bus bandwidth, a plurality of CAN segments may be emulated at the same time.

In a further embodiment, a CAN switch may be provided for switching between the CAN port and the high speed bus port. Dependent on the switch, the CAN message processor may either communicate with the CAN port or with the high speed bus port. This allows routing of CAN message through the CAN port or through the high speed bus port. This switch opens a migration path from old CAN devices to new devices being able to communicate with the high speed bus port. In this embodiment messages of a plurality of CAN segments may be transferred over the high speed bus port.

In another embodiment, a bypass switch may be provided between at least two multimedia network ports. Such a bypass switch may provide a simple bypass without causing high processing load to the network node. It may furthermore allow maintaining communication between other network nodes when the network interface controller is in a standby, low power or failure mode.

In a further embodiment, the network interface controller has at least two multimedia network ports, preferably a higher number of network ports. This allows connecting the network interface controller to a plurality of network lines. Preferably, the network interface controller can route data segments within the individual network frames into multimedia network ports according to their destination.

It is further preferred if at least one of the multimedia network ports is designed to handle a synchronous network protocol. Preferably the multimedia network disclosed herein is a synchronous network.

Due to significantly higher data rate of the multimedia network, the CAN arbitration mechanisms may not be necessary. Anyway, the network interface controller may use one or a plurality of these mechanisms to signal to the CAN controller or CAN stacks a transmission failure, which may for example be caused by a CRC error or a transmission line break. Furthermore, if there would be too many CAN messages in a too short time interval to be handled by a CAN controller, the arbitration mechanisms of the CAN bus may be simulated to signal a bus error to the CAN controller. Preferably an arbitration mechanism of the multimedia network is used. This may be a preemptive acknowledge signal where a receiving network interface controller signals a transmitting network interface controller the availability of receiving buffer space. For the case there is no receiving buffer space,the transmitting network interface controller may simulate a collision to the attached can controller. Furthermore flow control of the multimedia network may be used to control the message flow. It is preferred, if a CAN message is transferred with a higher priority at the multimedia network, if it has been delayed for some time. The message priority may be increased with increasing delay time of the can message. In an alternative embodiment a CAN priority may be mapped to a multimedia network priority.

The components described herein may either be realized in hardware or in software. For example, the CAN switch may be software implemented. Furthermore a network interface controller may have a plurality of CAN ports and/or a plurality of high-speed bus ports.

A high-speed network frame which is used by the multimedia network ports preferably provides sections for transmission of CAN messages. The sections may be assigned to specific CAN bus segments. In an alternate embodiment these sections may be assigned to CAN messages in general. To reduce latency it may be preferable to distribute several CAN sections over a high-speed network frame. Most preferably each of these CAN sections may transport CAN messages in general. For identifying the sections a section identifier may be attached to the CAN messages within the high-speed network frames. Most preferably the space available for transporting CAN messages is allocated dynamically, most preferably immediately after a CAN message has been received by a network interface controller. This minimizes latency and increases throughput.

A further aspect of the invention relates to a method of delivering CAN messages between CAN controllers by means of a multimedia network. The method comprises the steps of receiving a CAN message from a first CAN controller, inserting the message into a multimedia network frame at a first network interface controller, transporting the multimedia network frame to the second network interface controller, extracting the message from the multimedia network frame, emulating CAN arbitration and transmitting the CAN message to a second CAN controller. Modifications of the method are by using embodiments as disclosed herein.

The embodiments disclosed herein provide a simple interface for CAN controllers to a modern multimedia network which preferably has a higher speed. Such a multimedia network may provide a data rate of 5 Mbits per second, 20 Mbits per second or higher. It provides the same interface as a CAN transceiver would provide, and therefore is hardware and software compatible with existing CAN interfaces. It is not necessary to make changes in the CAN transceiver which often is embedded within a microcontroller. Furthermore existing CAN stacks may be used further.

The network interface controller further allows connection to a multimedia control unit which can communicate with the multimedia network and use many of the features of the multimedia network for multimedia streaming. Herein, the term multimedia control unit is used for any control unit which uses features of the multimedia network going beyond the capabilities of a CAN bus. Therefore, this may be for example an engine control unit requiring a higher data volume for communication.

Furthermore, existing CAN wire harnesses may be used for the multimedia network. For this purpose, the multimedia network ports are adapted to the cable characteristics, like impedance, bandwidth, and shielding of the CAN cables. To reduce the high frequency radiation and improve the EMI performance, data transmitted by the multimedia network ports preferably is scrambled. Such a scrambling may be done by using random numbers. Furthermore, at least one multimedia network port may be enabled for a bidirectional communication, therefore reducing the numbers of cables.

The embodiments disclosed herein further provide a simple migration path from old CAN interfaces and controllers to a new multimedia enabled network. This new network replaces a plurality of old CAN networks and harnesses by a single consistent new network using a single harness.

### Description of Drawings

In the following the invention will be described by way of example, without limitation of the general inventive concept, on examples of embodiment with reference to the drawings.
Fig. 1 shows a network interface controller.
Fig. 2 shows the network interface controller communicating with a CAN control unit and a multimedia control unit.
Fig. 3 shows a general control unit connected to network interface controller.
Fig. 4 shows an application communicating CAN messages over the high speed line.
Fig. 5 shows a typical high speed network.
Fig. 6 shows a high speed network frame.
Fig. 7 shows an alternate network frame.

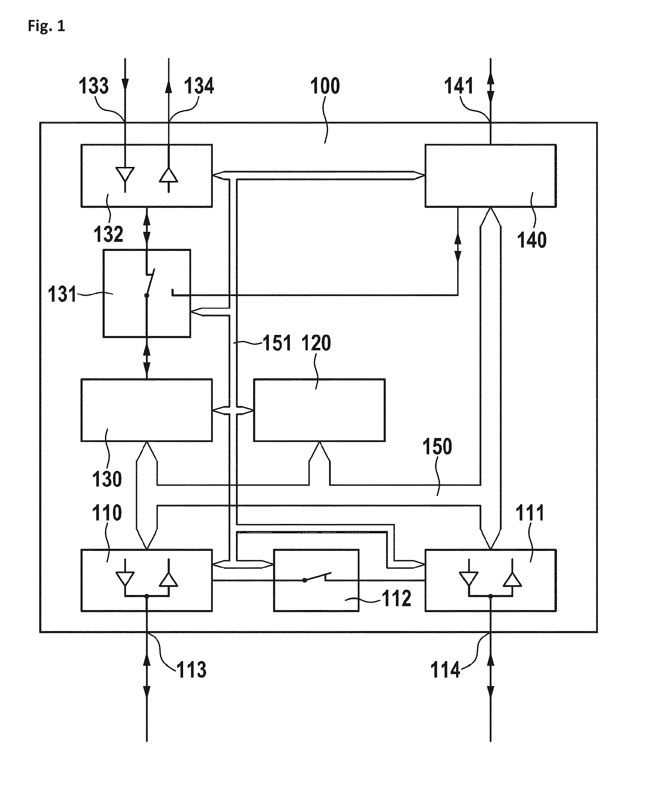

In Fig. 1, a network interface controller according to the invention is shown. The network interface controller has a first multimedia network port 110 and a second multimedia network port 111. The first multimedia network port 110 is connected to a first multimedia network line 113. Preferably, this multimedia network line is an unshielded twisted pair cable (UTP). It may be any other cable or an optical fiber, preferably a plastic optical fiber. The multimedia network port 111 is connected to a multimedia network line 114, which may be of the same type as multimedia network line 113, or may be a different type. The first multimedia network port 110 and the second multimedia network port 111 preferably are connected by a bypass switch 112, which allows to directly connect the first multimedia network line 113 and the second multimedia network line 114, without requiring any processing of the data by the network interface controller. Such a bypass switch would allow bypassing network traffic for the case the network interface controller is in a low power or standby mode, or in a failure state. For communication with a multimedia control unit, a high speed bus port 140 is provided. This high speed bus port can communicate with the multimedia network ports by means of routing bus 150, which preferably is a high speed bus capable of transferring data with a rate of at least the data rate of the multimedia network lines. The high speed bus port further has a high speed line 141 to input and/or output data, preferably streaming data. It may be connected to a multimedia control unit 300. For controlling the network interface controller, a microprocessor 120 may be provided. Preferably, this microprocessor may communicate with the components of the network interface controller by the routing bus 150 and/or by a control bus 151. To provide a CAN interface, a CAN message processor 130 is provided, which preferably is also connected to the routing bus 150, although this connection is not required. Due to the comparatively low data rate of the CAN bus, the CAN message processor may alternatively receive the data from the processor 120. The CAN message processor is connected by an optional CAN switch 131 to a CAN port 132, and/or the high speed bus port 140. The CAN message processor may output CAN messages via CAN port 132 by a CAN Tx line 133 and it may input CAN messages via a CAN Rx line 134 to CAN port 132. External to the CAN port there may be connected a CAN control unit 200. The CAN port 132 preferably has the same interface as a CAN transceiver, and therefore allows direct connection to a CAN controller. Furthermore, the CAN message processor may communicate by means of the high speed bus port 140 and the high speed line 141 with a multimedia control unit 300 or a CAN control unit.

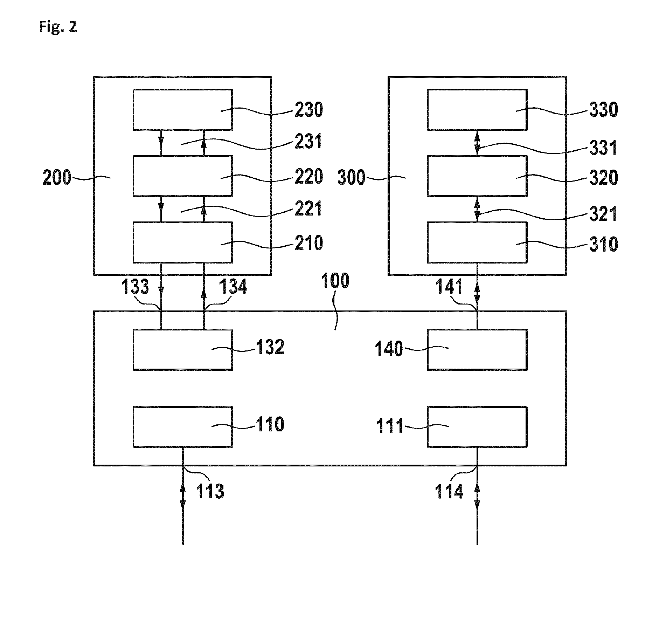

In Fig. 2, a network interface controller 100 is connected to a CAN control unit 200 and a multimedia control unit 300. The CAN control unit 200 preferably has an application 230 which exchanges CAN messages 231 by using CAN stacks 220 which controls a CAN controller 210 by using basic CAN messages and control commands 221. The CAN controller 210 is connected via CAN Tx line 133 and CAN Rx line 134 to CAN port 132 of the network interface controller. A multimedia control unit 300 preferably has an application 330 which exchanges high speed bus data 331 with high speed bus stacks 320. These further communicate by using high speed bus data 321 with a high speed bus controller 310, which preferably is a MediaLB, an I2C, or SPI controller, by means of high speed line 141 with high speed bus port 140 of network interface controller 100.

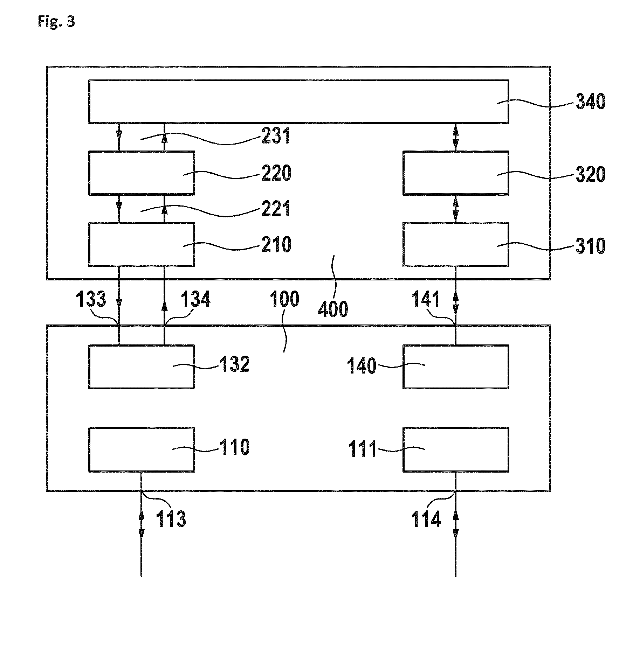

In Fig. 3, a general control unit 400 is connected to a network interface controller 100. This control unit 400 combines the functions of CAN control unit 200 and a multimedia control unit 300. It has an application 340 which may use a CAN stack 220 with CAN controller 210 for transmitting and receiving CAN messages. It furthermore may use high speed data bus stacks 420 together with high speed bus controller 310 for transmitting and receiving high speed data like multimedia streaming data. The application 340 shown herein may be a further step in development which may rely on pre-existing CAN stacks. This is a convenient upgrade path.

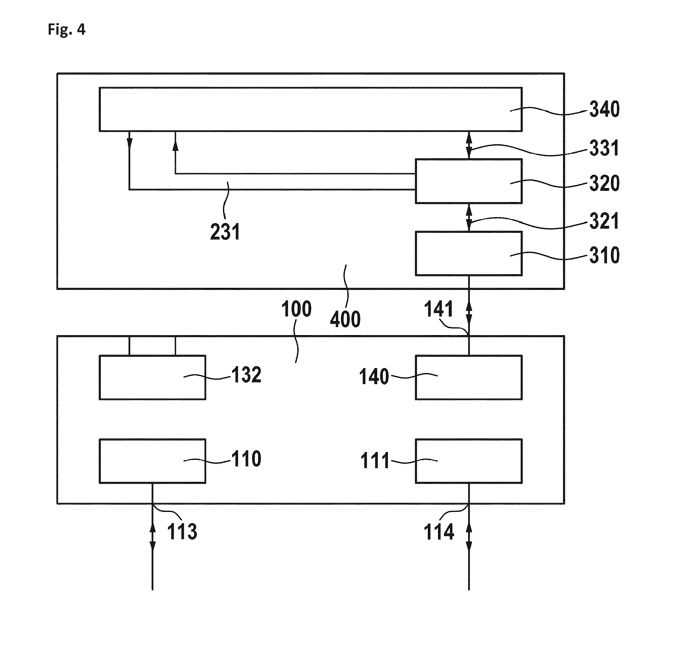

In Fig. 4, the final step of migration is shown. Here, application 340 is adapted to communicate CAN messages 231 directly to high speed bus stacks 320 which forward these messages by high speed bus controller 310 and high speed line 141 to high speed bus port 140. The message reception may be done in the opposite direction. Here, the old CAN stack 220 and the CAN controller 210 is no more required. In later production, the network interface controller 100 may even be modified by omitting CAN port 133 and components associated thereto, like CAN switch 131. In this embodiment, the CAN communication is no more limited by the capabilities of the CAN controller. Therefore, for example a plurality of CAN segments may be addressed by the application. Furthermore higher CAN data rates beyond the CAN specification may be achieved.

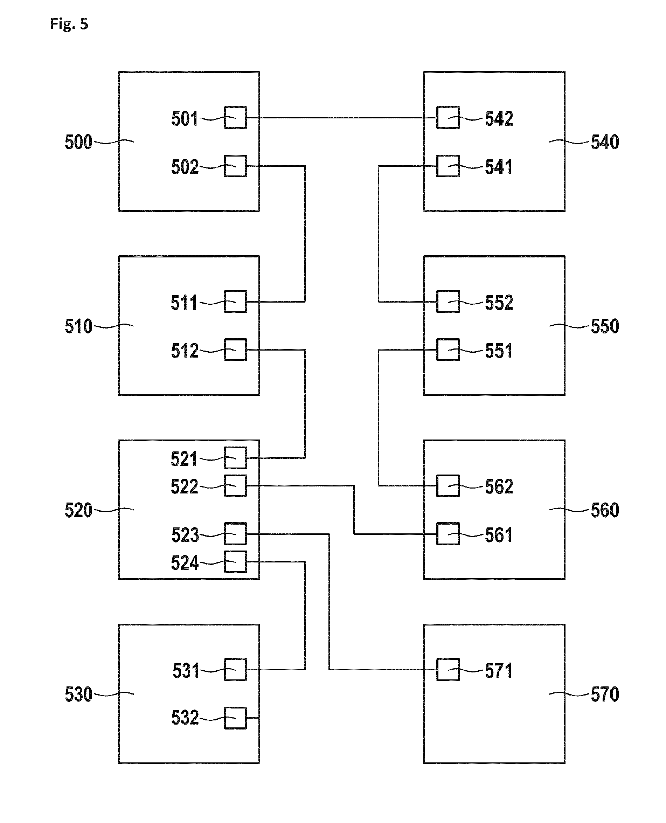

In Fig. 5, a typical high speed network is shown according to the invention. Network nodes 500, 510, 520, 530, 540, 550, 560, and 570 are connected by multimedia network lines. Each network node has at least one network port. Herein, network node 500 has network ports 501 and 502. Network node 510 has network ports 511 and 512. Network node 520 has network ports 521, 522, 523, and 524. Network node 530 has network ports 531 and 532. Network node 540 has network ports 541 and 542. Network node 550 has network ports 551 and 552. Network node 560 has network ports 561 and 562. Network node 570 only has one network port 571.

Here, network nodes 500, 510, 520, 540, 550, and 560 are connected in a daisy chain manner to form a ring network. Network nodes 530 and 570 are connected with single lines to network node 520. Here, the communication must be bidirectional, while in the daisy chain, a unidirectional communication would be sufficient, although a bidirectional communication may increase data throughput and/or reliability. Preferably network node 520 is a routing node which selectively forwards the network traffic only in the required network branches.

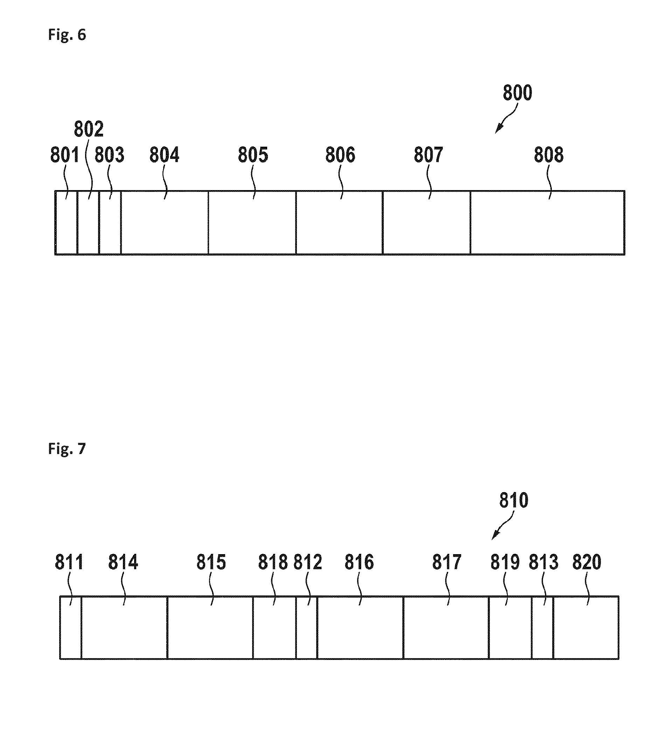

In Fig. 6, a multimedia network frame is shown. Here, only the contents of the frame without header, trailer, and other protocol-related components are shown. The frame may be divided in a plurality of sections. For example, there may be three independent CAN sections 801, 802, and 803 assigned to individual CAN segments. The CAN segments are isolated from each other and assigned to specific network interface controllers.

Furthermore, streaming data, preferably synchronous streaming data may be transmitted by sections 804 to 806. Section 807 may be assigned to isochronous data and section 808 may be assigned to packetized data. It is obvious that the number of sections, the sequence of sections and the content of sections may be modified.

In Fig. 7, an alternate multimedia network frame is shown. Here, the CAN sections assigned to individual segments are not positioned adjacent to each other, but almost evenly spread over the network frame. This may help to reduce latency. If for example the frame rate is 48 kHz, which is a frame rate suitable for synchronous multimedia streaming, a CAN message may only be sent every 20.8 microseconds. Here, the time delay between CAN messages is 1/3 of this time. The drawback is that segmentation as disclosed above must be handled differently. The most simple approach would be to assign section 811, 812, and 813 to the same CAN segment. Another approach would be to have a segment identifier with each CAN message for identifying the associated CAN segment. The CAN messages then may be placed in any one of the segments or even distributed over the segments. In the embodiment shown herein, also synchronous streaming data may be provided in sections 814 to 816. Isochronous data may be transmitted in a section 817, and packetized data may be transmitted in section 818, 819, and 820.

### List of reference numerals

- 100: network interface controller
- 110: first multimedia network port
- 111: second multimedia network port
- 112: bypass switch
- 113: first multimedia network line
- 114: second multimedia network line
- 120: microprocessor
- 130: CAN message processor
- 131: CAN switch
- 132: CAN port
- 133: CAN Tx
- 134: CAN Rx
- 140: high speed bus port
- 141: high speed line
- 150: routing bus
- 151: control bus
- 200: CAN control unit
- 210: CAN controller
- 220: CAN stacks
- 221: basic CAN message
- 230: CAN application
- 231: CAN message
- 300: multimedia control unit
- 310: high speed bus controller
- 320: high speed bus stacks
- 320: CAN stacks
- 321: high speed bus data
- 330: high speed application
- 331: high speed bus data
- 340: application
- 400: control unit
- 510,520,530,540,550,560,570: network nodes
- 501, 502, 511, 512, 521, 522, 523, 524, 531,:
- 532, 541, 542, 551, 552, 561, 562, 571: network ports
- 800: network frame
- 801: CAN section 1
- 802: CAN section 2
- 803: CAN section 3
- 804-806: synchronous streaming data
- 807: isochronous data
- 808: packetized data
- 810: alternate network frame
- 811: CAN section 1
- 812: CAN section 2
- 813: CAN section 3
- 814-816: synchronous streaming data
- 817: isochronous data
- 818 ― 820: packetized data10 housing

## Claims

1. Network interface controller comprising:
- at least one multimedia network port (110, 111) for transmitting and receiving multimedia network frames (800, 810),
- at least one CAN message processor (130) for inserting and/or extracting CAN messages into or from the multimedia network frames,
- at least one CAN port (132) for outputting the messages received by the at least one CAN message processor (130) and/or inputting the messages to be transmitted by the at least one CAN message processor (130),
wherein at least one CAN message processor (130) emulates CAN message arbitration between the CAN messages extracted from the multimedia network frames and the CAN messages inputted by the least one CAN port (132).

2. Network interface controller according to claim 1,
**characterized in, that**
at least one high speed bus port (140) is provided for inputting and outputting high speed and/or streaming data.

3. Network interface controller according to claim 2,
**characterized in, that**
at least one CAN switch (131) is provided for switching the CAN package processor (130) between the at least one CAN port (132) and the high-speed bus port (140).

4. Network interface controller according to any one of the preceding claims,
**characterized in, that**
the at least one multimedia network port (110, 111) is connected by a routing bus (150) to at least one of the CAN package processor (130) and the high speed bus port (140).

5. Network interface controller according to any one of the preceding claims,
**characterized in, that**
a bypass switch (112) is provided between at least two of the multimedia network ports (110, 111).

6. Network interface controller according to any one of the preceding claims,
**characterized in, that**
a plurality of multimedia network port (110, 111) is provided and the network interface controller is enabled to route sections of network frames only to those multimedia network ports which are connected to further network interface controllers to which the sections of network frames are addressed.

7. Network interface controller according to any one of the preceding claims,
**characterized in, that**
at least one of the multimedia network ports (110, 111) has means for handling a synchronous network protocol.

8. Method for delivering a CAN message between a first CAN controller and a second CAN controller by means of a multimedia network comprising the steps of:
- receiving a CAN message from a first CAN controller by the first network interface controller,
- inserting the message into a multimedia network frame,
- transporting the multimedia network frame over the multimedia network to the second network interface controller,
- extracting the message from the multimedia network frame by the second network interface controller,
- emulating CAN arbitration, and
- transmitting the CAN message to a second CAN controller.
